# EUROPEAN PATENT APPLICATION

(11) **EP 2 407 725 A2**
(43) Date of publication of application: **18.01.2012**
(21) Application number: 11174190.6
(22) Date of filing: 15.07.2011
(51) Int. Cl.: F24F 1/00, F24F 11/00, F24F 7/007

(54) **Device and method for local displacement ventilation of a space**

(30) Priority: 15.07.2010 NL 2005083; 26.08.2010 NL 2005273
(71) Applicant: Biddle B.V., 9288 HA Kootstertille (NL)
(72) Inventor: Te Sligte, Hendrik Jan, 7331 TV Apeldoorn (NL); Bethlehem, Peter Willem-Alexander, 9231 EA Surhuisterveen (NL)
(74) Representative: Verdijck, Gerardus

(57) **Abstract**

The present invention relates to a device, climate control system and method for local displacement ventilation of a space. The invention relates more particularly to providing a device in a space in order to condition this space and herein avoid poor-quality air with relatively high CO₂, wherein the device comprises:
- a housing;
- a fan arranged in the housing;
- an external air inlet operatively connected to the fan; and
- an outflow opening.

## Description

The present invention relates to a device for local displacement ventilation of a space. The invention relates more particularly to providing such a device in a space, such as a classroom, in order to condition this space and herein avoid poor-quality air with relatively high CO₂.

It is known in practice that spaces in which people and devices such as PCs are present result in a poor climate. In order to avoid health problems use is made of central ventilation systems. One of the problems occurring here is that such systems are difficult to apply in existing buildings. An additional problem with known devices is that air that is introduced in a space is mixed resulting in non-optimal ventilation.

The present invention has for its object to improve the indoor climate in a space and to provide a device for this purpose.

This object is achieved with the device according to the invention, the device comprising:
- a housing;
- a fan arranged in the housing;
- an external air inlet operatively connected to the fan; and
- an outflow opening.

A locally functioning ventilation device is realized by providing a device provided with a housing, fan, external air inlet and an outflow opening. The indoor climate can hereby be influenced locally in direct manner. It is possible here to respond to disruptive and other influences of for instance open doors or a varying number of people in the space. A desired indoor climate is hereby realized.

Local provision of the device according to the invention also achieves that operation is demand-controlled. This avoids excessive ventilation resulting in unnecessary energy consumption, and also avoids too little ventilation.

Local provision of the device according to the invention whereby a stand-alone function is realized, also achieves that installation can be carried out separately per space. This is particularly advantageous in existing buildings in which new air ducts cannot be arranged, or only with a great deal of breaking work.

In an advantageous embodiment according to the invention the apparatus is activated when too high a CO₂ content is measured in the space. Such a space is for instance a classroom in which people such as teacher(s) and children are present. The apparatus can thus begin to ventilate at a measurement of for instance above 600 ppm of CO₂. Fresh air is introduced here into the space at a relatively low speed, preferably in the range of 0.2-0.5 m/s. The air speed preferably amounts to about 0.25 m/s. Tests have established that no draught effect occurs here and that additional noise nuisance is limited.

A displacing effect is obtained by preferably blowing the air in close to the ground. By introducing air into the indoor space preferably at a temperature about 1°C lower than the room temperature, the introduced air remains close to the floor. At a heat source, for instance a person or device, the air will heat and begin to rise. The rising air here displaces the poor-quality air that is present, in which there is for instance too high a CO₂ content. As an additional advantage the temperature in for instance a classroom is regulated by the lower blow-in temperature. In view of the relatively high density of people producing heat in such a space, some form of cooling is necessary under determined conditions, especially in well insulated spaces. A person produces about 80 Watts, children for instance about 60 Watts. In the case of cooler outside air the amount of energy required can remain limited by introducing cooler air into the space.

The displaced air is preferably discharged at the top of the space. The displacing ventilation device according to the invention is hereby operatively connected to an external air extraction, optionally a mechanical extractor. It is particularly advantageous here that particularly poor-quality air is discharged by the displacing action instead of mixed air. An effective and efficient climate control system is hereby obtained.

Preferably, the device according to the invention is positioned at or near the floor of the space. This assures that the introduced air "forces" the poor-quality air to move to the discharge at the top of the space. In fact, this achieves so-called displacement ventilation, instead of mixed ventilation with known devices. Therefore, the device according to the invention optimises the overall ventilation efficiency.

Tests have shown that the quantity of displacement air amounts to about 600 m³/hour for classrooms used in practice. It is hereby possible to stay within the desired norms under many of the usual conditions. In a system based on mixing of air (with conventional devices) instead of displacement ventilation with the device according to the invention the amount is considerably higher, for instance about 1000 m³/hour. For a class room a CO₂-level with conventional system was measured of up to 2000 ppm, while with the device according to the present invention the level never exceeded 1000 ppm. The stated quantities do of course depend greatly on the specific circumstances and conditions.

In an advantageous preferred embodiment according to the present invention the device comprises an internal air inlet for circulating air in the space.

The indoor climate is controlled in efficient manner by the combination of ventilation and circulation. The apparatus can for instance thus be utilized effectively for a classroom by for instance heating the classroom to the desired temperature an hour prior to the start of school. Circulation takes place here with the internal air inlet since no people are present, and in addition most apparatus will not be active. Once school begins, a switch will be made to the continuous or intermittent displacement ventilation with the external air inlet. If desired, it is possible to ventilate and to circulate in combination or alternately, for instance by making use of a mixing valve between the ventilation and circulation openings. The indoor climate can hereby be controlled as desired.

In an advantageous preferred embodiment according to the present invention a first outflow opening is provided on the side of the apparatus and a second outflow opening on the front side of the apparatus.

A substantially complete replenishment of the lower air layer in the space is effected by providing an outflow opening on the side of the apparatus or at the outer end of the apparatus and an opening on the front side of the apparatus which is directed toward the indoor space. A uniform indoor climate is hereby realized.

An additional advantage of providing a first opening on the side is that the speed of airflow therefrom can be set slightly higher if desired, since people are not usually directly present on the sides of the apparatus. An air guide is preferably provided between the fan and the outflow openings in the air duct for the purpose of distributing the air over the openings. Such an air guide can be provided in stationary manner with a fixed distribution of air over the opening or can be provided in adjustable manner for an optimal adjustment to the situation in the indoor space. With an air distribution over the openings the air speed can for instance thus amount to 0.5 m/s through the first opening and to 0.25 m/s through the second opening, without affecting the comfort of people in the space. This further increases the effectiveness of the device.

In an advantageous preferred embodiment according to the present invention the device is provided with a heat exchanger.

The incoming air is conditioned to the desired conditions by providing a heat exchanger. The heat exchanger preferably comprises a heating element. The temperature of the introduced air can hereby be regulated. The unit preferably also comprises a cooling element for cooling for instance warm outside air if desired. Such a cooling element is preferably provided with a drip-tray for collecting condensation inside the device. The heat exchanger of the device is preferably provided with both a heating element and a cooling element.

In an advantageous preferred embodiment according to the present invention the local device is provided with a control for control thereof, wherein the control is operatively connected to a CO₂ sensor.

In a control on the basis of the CO₂ content the apparatus is activated when a CO₂ content measured in the space is too high. Such a space is for instance a classroom in which people such as teacher(s) and children are present. The apparatus can thus begin to ventilate at a measurement of for instance more than 600 ppm CO₂. An acceptable indoor climate is hereby guaranteed.

In an advantageous preferred embodiment according to the present invention the control forms part of a central control system.

Separate devices according to the invention in separate spaces are adjusted to each other by providing a central control. The desired settings can thus be viewed, monitored and/or set centrally, and the indoor climate can be monitored per space. Each local device preferably responds directly to the locally placed sensors located in the same space. A centrally controlled, locally operating device is hereby obtained. It is also possible with the central regulation to adjust the functioning of individual apparatuses to each other. The air from the space such as a classroom is thus preferably extracted to the corridor. This takes place from each classroom. The air from the corridor is then extracted centrally and treated centrally, for instance for the purpose of heat recovery. Owing to the central control the operation hereof can remain as optimal as possible by adjusting individual devices according to the invention thereto, for instance by setting active time periods per device.

In an advantageous preferred embodiment according to the present invention the device further comprises noise reducing means.

By providing noise reducing means the noise production of the device is reduced. This enables placing the device according to the invention in a class room, for example. The noise reducing means may comprise one or more of: providing absorbing open cell material in the inlet chamber where air from one or more of the inlets enters the device, providing between individual fans some absorption blocks, providing the outlet air chamber with air guiding means, preferably a number of absorbing strips, providing sealing means for the filters and/or grids in the device.

The invention also relates to a climate control system for realizing a desired indoor climate. This system makes use of one or more of the above described devices.

Such a system provides the same effects and advantages as those stated in respect of the device. It is also possible to provide the system with a heat recovery system. The air from the space, such as a classroom, is thus preferably extracted to the corridor. This takes place from each classroom. The air from the corridor is then extracted centrally and treated centrally, such as for the purpose of heat recovery. No heat is hereby lost, and the heat can for instance be used to pre-heat the external ventilation air. Other uses of the recovered heat are of course also possible.

The invention further relates to a method for realizing a desired indoor climate. This method makes use of one or more of the above described devices.

Such a method provides the same effects and advantages as those stated in respect of the device and/or the system.

Further advantages, features and details of the invention will be elucidated on the basis of preferred embodiments thereof, wherein reference is made to the accompanying drawings, in which:
- Figure 1 shows a view of a space provided with a device according to the invention;
- Figure 2 shows a front view of the device of figure 1;
- Figure 3 shows a side view of the device of figure 1;
- Figure 4 shows a view of the interior of the device of figure 1; and
- Figure 5 shows an alternative configuration of a device according to the invention.

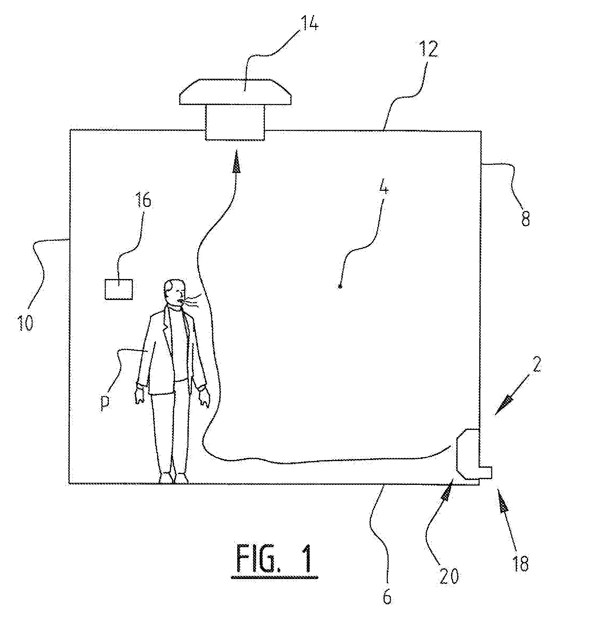

A local displacement ventilation apparatus 2 (figure 1) is placed in a space 4. Space 4 has a floor 6, outer wall 8, inner walls 10 and ceiling 12. Apparatus 2 is placed in the immediate vicinity of floor 6. An extractor 14 is placed in ceiling 12. In the shown embodiment a sensor 16 is placed at eye level of a person P in space 4. In the shown embodiment sensor 16 is a CO₂ sensor. Apparatus 2 has an external feed 18 for feeding outside air for ventilation and an internal feed 20 for feeding inside air for circulation.

In the case of circulation, air from space 4 is drawn in via inlet 20 of apparatus 2 and reintroduced into space 4 after possible conditioning. In the case of ventilation, air is drawn in from outside via inlet 18 and introduced into space 4 after possible conditioning. Owing to the low air speeds, in the shown embodiment up to about 0.5 m/s, a flow along ground surface 6 can be realized by placing apparatus 2 at floor 6. This effect is enhanced by blowing in the inflow air at a temperature about one degree colder than that in the room. At a heat source, such as person P, the air will be heated and rise, and herein displace the poor-quality air upward in the direction of extractor 14, as indicated with the arrow in figure 1.

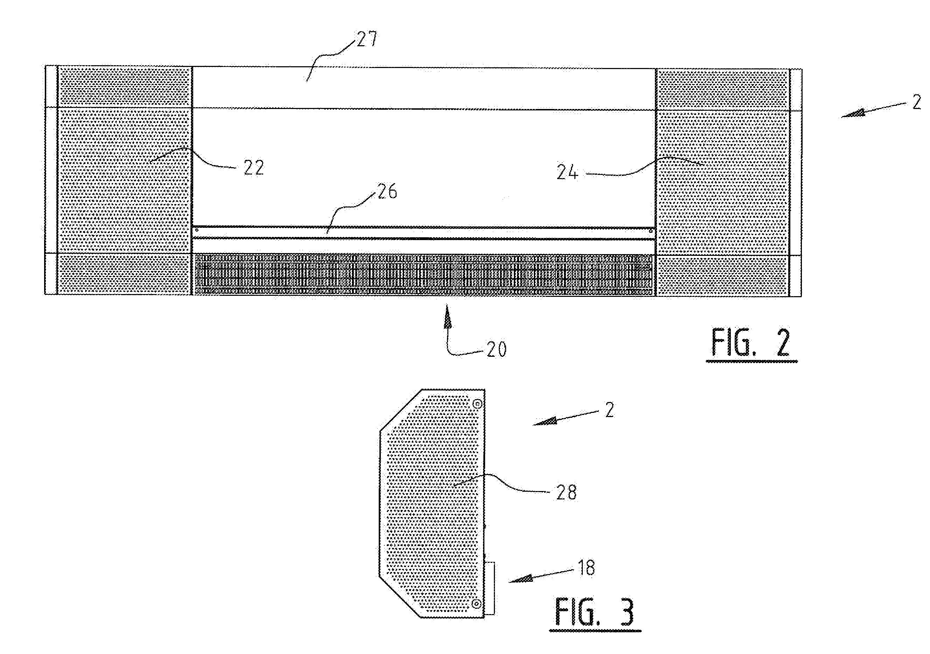

In the shown embodiment apparatus 2 (figure 2) has an inlet 20, and on the front side a first outflow grid 22 and a second outflow grid 24. The various necessary components are situated between grids 22,24. Also situated on the front side is beam 26 for these components, in particular a filter. Front panel 27 is optionally detachable in order to gain access to the interior of apparatus 2. In the shown embodiment front panel 27 also comprises grids 22,24. Lateral outflow grids 28 are located on the side of apparatus 2 (figure 3).

In the shown embodiment the overall width of apparatus 2 amounts to about 1800 mm, with a depth of about 250 mm and height of about 550 mm. The external air inlet 18 is provided over a height of about 111 mm. In the shown embodiment grids 22,29 further take a dual or double-walled form so that a type of air chamber is obtained in the grid. This further improves the properties of the displacement air flow. Alternatively or in combination herewith use can be made of filter mats (not shown) in order to realize a homogeneous air distribution with low speed.

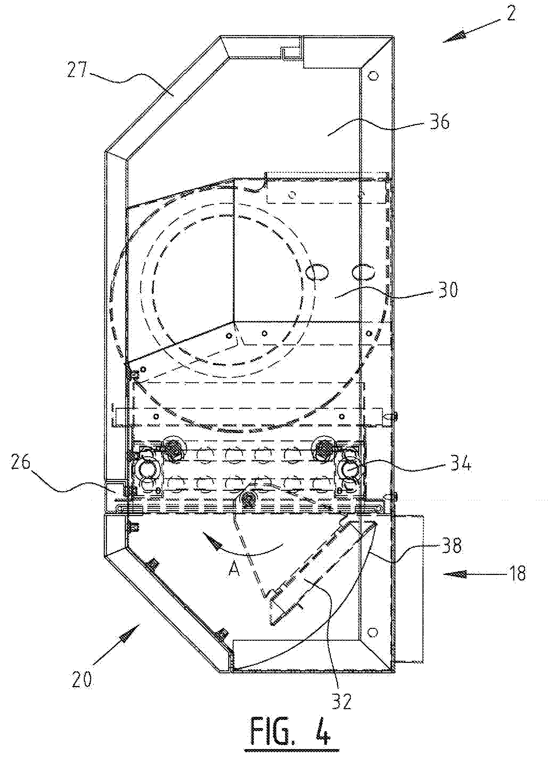

In the shown embodiment two fans 30 are situated on the inner side of apparatus 2 (figure 4). The shown fans 30 are direct current EC-fans which are continuously adjustable and can therefore be set as desired to a quantity of air. They can for instance be set for displacement ventilation at a low air speed of 0.25 m/s and a total combined air quantity of about 600 m³/hour, wherein the air quantity can rise to for instance 1200 m³/hour in special cases. Air is fed via inlet 18 and/or inlet 20, wherein mixing valve 32 controls the mutual ratio. Heating set 34 conditions the incoming air to the desired conditions. In the shown embodiment fans 30 blow upward, after which the air is transported laterally via ducts 36. Owing to the configuration of ducts 36 in the shown embodiment a relatively large amount of air is blown out laterally through grids 26. An air distribution with a valve or baffle can optionally be placed in duct 36 for optimal distribution of the air over grids 22,24,26.

In the shown embodiment heating set 34 is provided on either side with external connecting points, or set 34 is reversible (left-right interchangeable). This simplifies installation since connection to external piping can be realized by the installer in the most effective manner.

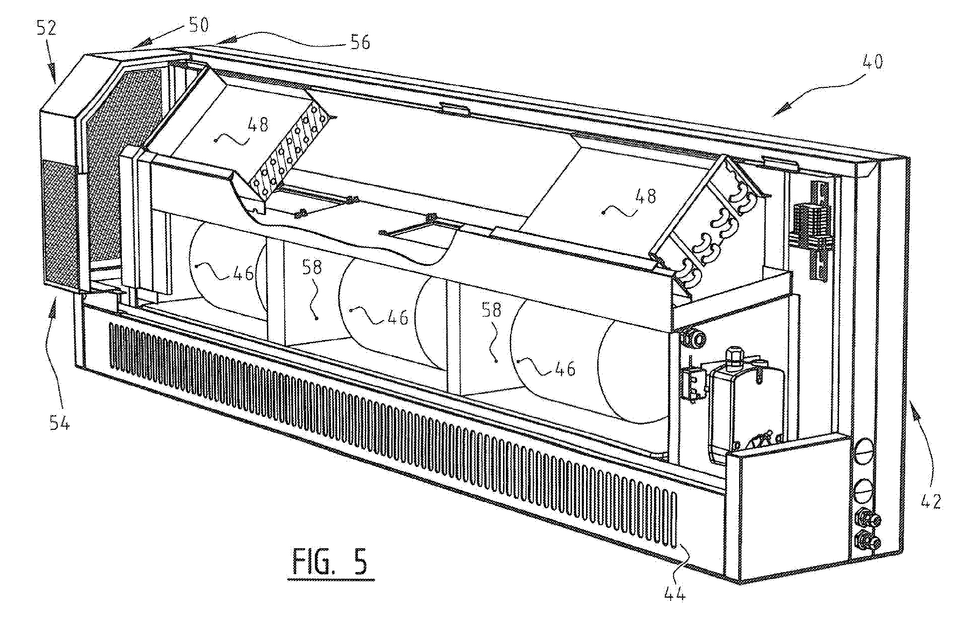

An alternative configuration for the device 40 according to the invention (figure 5) comprises a back panel 42 with a connection for outside or fresh air supply. In the illustrated embodiment the front panel is removed for illustrative purposes. Inlet 44 is provided on the front of device 40 enabling circulation of air within the room. Fresh and/or circulation air is moved with fans 46 from front inlet 44 and/or back panel 42 through conditioning units 48 for conditioning the air. After conditioning the air is transferred to outflow grid 50 on sides 52 of device 40 and/or to outflow grids 54 on the front of device 40. Air chambers 56 divide air over the grids 52,54 in a desired ratio.

Some additional noise reducing measures are optionally provided in devices 2,40. These measures include the provision of absorbing open cell material in the inlet chamber where air from front inlet channels 20,44 and back inlet channels or external feed 18 is mixed, if relevant. In addition, between fans 46 there are provided 38-50 mm thick absorption blocks 58. Also, air chamber 56 is provided with air guiding means (not shown). Experiments have shown a noise reduction of about 3-4 dB.

Features of one of the illustrated devices 2,40 can also be provided for the other device. This especially applies to the additional noise reducing measures described above.

The present invention is by no means limited to the above described preferred embodiments thereof. The rights sought are defined by the following claims, within the scope of which many modifications can be envisaged. It is thus expressly possible to combine specific aspects of the different shown and/or described embodiments with each other. Two fans 30 are thus provided in the shown embodiment. Other configurations, in which more fans 30 and/or grids 22,24,26 are for instance provided, are of course also possible.

## Claims

1. Displacement ventilation device, comprising:
- a housing;
- a fan arranged in the housing;
- an external air inlet operatively connected to the fan; and
- an outflow opening.

2. Displacement ventilation device as claimed in claim 1, wherein the fan and outflow grid are embodied such that the outflow speed amounts to a maximum of 0.5 m/s and preferably a maximum of 0.25 m/s.

3. Displacement ventilation device as claimed in claim 1 or 2, wherein the device is operatively connected to an external air outlet provided for discharge of air from a space in which the device is provided during use.

4. Displacement ventilation device as claimed in one or more of the claims 1, 2 or 3, further comprising an internal air inlet for circulating air in the space.

5. Displacement ventilation device as claimed in claim 4, comprising a mixing valve for controlling the ratio of ventilation and circulation air.

6. Displacement ventilation device as claimed in one or more of the claims 1-5, comprising a first outflow opening on a side of the device and a second outflow opening on a front side of the device.

7. Displacement ventilation device as claimed in claim 6, further comprising an air flow guide for realizing a first and a second air speed from respectively the first and the second opening.

8. Displacement ventilation device as claimed in one or more of the claims 1-7, further comprising a heat exchanger for conditioning the air.

9. Displacement ventilation device as claimed in one or more of the claims 1-8, wherein the heat exchanger comprises a heating element and/or a cooling element.

10. Displacement ventilation device as claimed in one or more of the claims 1-9, further comprising a control for controlling the device, wherein the control can be operatively connected to a CO₂ sensor.

11. Displacement ventilation device as claimed in claim 10, wherein the control forms part of a central control system.

12. Displacement ventilation device as claimed in one or more of the claims 1-10, further comprising noise reducing means.

13. Climate control system comprising one or more of devices as described in one or more of the claims 1-12.

14. Climate control system as claimed in claim 13, comprising a heat recovery system.

15. Method for displacement ventilation of a space, comprising of providing a device as described in one or more of the claims 1-12.
